# EUROPÄISCHE PATENTSCHRIFT

(11) **EP 3 632 054 B1**
(45) Veröffentlichungstag und Bekanntmachung des Hinweises auf die Patenterteilung: **06.03.2024**
(21) Anmeldenummer: 18725511.2
(22) Anmeldetag: 17.05.2018
(51) Int. Cl.: H04L 12/423, H04L 12/403, H04L 12/40

(54) **BESTIMMUNG VON DATENBUSTEILNEHMERN EINES LOKALBUSSES**
DETERMINATION OF NODES OF A LOCAL DATA BUS
DETERMINATION DE NOEUDS D'UN BUS DE DONNÉES LOCAL

(30) Priorität: 24.05.2017 DE 102017208830
(43) Veröffentlichungstag der Anmeldung: 08.04.2020
(73) Patentinhaber: WAGO Verwaltungsgesellschaft mbH, 32423 Minden (DE)
(72) Erfinder: JEROLM, Daniel, 49152 Bad Essen (DE)
(74) Vertreter: Bardehle Pagenberg Partnerschaft mbB Patentanwälte Rechtsanwälte
(86) Internationale Anmeldenummer: PCT/EP2018/062951
(87) Internationale Veröffentlichungsnummer: WO 2018/215297

(56) Entgegenhaltungen:
- EP-A1- 0 682 431
- EP-A2- 0 290 934
- DE-A1- 19 545 566

## Beschreibung

### 1. Gebiet der Erfindung

Die Erfindung betrifft im Allgemeinen die Bestimmung von Datenbusteilnehmern eines Lokalbusses, insbesondere die Bestimmung anhand einer Adressabfrage von kommunikationsbereiten Datenbusteilnehmern.

### 2. Stand der Technik

Bussysteme und insbesondere Lokalbussysteme sind aus heutigen Automatisierungsanlagen kaum noch wegzudenken. Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt (*engl.* Header) oder angehängt (*engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können. Die an einen Lokalbus angeschlossenen Lokalbusteilnehmer können auch als Datenbusteilnehmer bezeichnet werden, weil diese Daten auf dem Lokalbus austauschen. Ein Datenbusteilnehmer kann dabei zum Steuern oder Überwachen eines Prozesses dienen, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Daten für den Lokalbus um oder umgekehrt. Die Datenbusteilnehmer können auch als Lokalbusteilnehmer bezeichnet werden.

Ein Ringbus ist dabei eine spezialisierte Form des Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

Zum Senden an spezifische Datenbusteilnehmer werden Datenpakete mit einer dem Datenbusteilnehmer entsprechenden Adresse versehen, so dass der Datenbusteilnehmer, der die entsprechende Adresse aufweist, sich die Daten aus dem Datenpaket entnehmen kann, wie zum Beispiel in EP 0 682 431 A1 beschrieben. Hierzu müssen aber vorab die Adressen der Datenbusteilnehmer bekannt sein. Im Stand der Technik werden bei Ringbussen häufig die Datenbusteilnehmer entsprechend ihrer physikalischen Reihenfolge im Ringbus adressiert. Dies macht aber die Selbstverwaltung des Ringbusses sehr unflexibel und statisch, insbesondere wenn neue Datenbusteilnehmer in den Ringbus eingefügt werden oder alte ersetzt werden.

Aufgabe der vorliegenden Erfindung ist es daher Verfahren und Vorrichtungen bereitzustellen, mit denen eine flexible Bestimmung der Datenbusteilnehmer möglich ist auch beim Tausch von Datenbusteilnehmern oder beim Initialisieren des Lokalbusses.

### 3. Zusammenfassung der Erfindung

Diese Aufgabe wird mit dem Verfahren und der Vorrichtung der unabhängigen Ansprüche gelöst. Vorteilhafte Ausführungsformen sind in den Unteransprüchen beschrieben.

Das erfindungsgemäße Verfahren zur Bestimmung von kommunikationsbereiten Datenbusteilnehmern verbunden mit einem Lokalbus in Form eines Ringbusses, weist auf, Empfangen, an einem Lokalbusmaster, zumindest ein Datenpaket übertragen über den Lokalbus, wobei das zumindest eine Datenpaket eine Adresse von einem kommunikationsbereiten Datenbusteilnehmer aus einer Anzahl von kommunikationsbereiten Datenbusteilnehmern in dem Lokalbus aufweist, wobei der kommunikationsbereite Datenbusteilnehmer innerhalb einer Reihenfolge der kommunikationsbereiten Datenbusteilnehmer ist. Des Weiteren weist das Verfahren auf Zuordnen der empfangenen Adresse zu einer relativen Position des kommunikationsbereiten Datenbusteilnehmers innerhalb der Reihenfolge der kommunikationsbereiten Datenbusteilnehmer durch den Lokalbusmaster, zur Bestimmung der kommunikationsbereiten Datenbusteilnehmer. Die Bestimmung der kommunikationsbereiten Datenbusteilnehmer weist dabei die Kenntnisnahme der Adressen der kommunikationsbereiten Datenbusteilnehmer auf.

Der Lokalbusmaster verwendet die so erlangten Informationen und ordnet die empfangenen Adressen einem bestimmten kommunikationsbereiten Datenbusteilnehmer zu. Dabei geschieht die Zuordnung nicht entsprechend der physikalischen Position der kommunikationsbereiten Datenbusteilnehmer am Lokalbus, sondern entsprechend der relativen Position der kommunikationsbereiten Datenbusteilnehmer. Dabei kann auch davon gesprochen werden, dass die physikalische Position die absolute Position der Datenbusteilnehmer am Lokalbus ist, wobei die relative Position sich ergibt in Abhängigkeit davon, wie die Datenbusteilnehmer kommunikationsbereit werden. Durch die Verwendung der relativen Position der Datenbusteilnehmer die abhängt nicht von der physikalischen Position des Datenbusteilnehmers, sondern von dessen Kommunikationsbereitschaft ist eine flexible Bestimmung möglich. Der Lokalbusmaster kann dabei eine Aufstellung der kommunikationsbereiten Datenbusteilnehmer und deren Adresse sowie deren relativer Position vorhalten. Dabei kann jeder relativen Position eine Adresse genau eines kommunikationsbereiten Datenbusteilnehmers zugeordnet sein. Diese Zuordnung kann aktualisiert werden, wenn ein neuer Datenbusteilnehmer mit dem Lokalbus verbunden wird oder wenn ein Datenbusteilnehmer entfernt wird. Auf Grund dessen, dass relative Positionen verwendet werden, kann ein neuer Datenbusteilnehmer und dessen Adresse einfach in die Aufstellung aufgenommen werden oder eine Adresse aus der Aufstellung entfernt werden, wenn ein Datenbusteilnehmer entfernt wird. Durch die Zuordnung der empfangenen Adresse der Datenbusteilnehmer zu einer relativen Position ist es auch für die Datenbusteilnehmer möglich ihre momentan gespeicherte Adresse weiter zu verwenden, ohne dass den Datenbusteilnehmern eine neue Adresse zugewiesen werden müsste oder der Datenbusteilnehmer mit der Adresse der physikalischen Position programmiert werden muss. Eine Umadressierung der Datenbusteilnehmer ist dementsprechend nur noch in Fällen nötig, in denen es Kollisionen gibt, d.h. in den Fällen in denen mehrere Datenbusteilnehmer die gleiche Adresse verwenden. Dies sorgt dafür, dass der Lokalbusmaster sehr schnell die kommunikationsbereiten Datenbusteilnehmer ansprechen kann, ohne dass langwierige Initialisierungsphasen zur Adressierung nötig wären.

Das erfindungsgemäße Verfahren weist weiter auf vor dem Empfangen des zumindest einen Datenpakets, Senden des zumindest einen Datenpakets vom Lokalbusmaster auf den Lokalbus an den kommunikationsbereiten Datenbusteilnehmer zur Abfrage der Adresse von zumindest einem der kommunikationsbereiten Datenbusteilnehmers, so dass diese Adresse der relativen Position des kommunikationsbereiten Datenbusteilnehmers zugeordnet werden kann. D.h. das zumindest eine Datenpaket zur Abfrage der Adresse zumindest eines kommunikationsbereiten Datenbusteilnehmers wird zunächst vom Lokalbusmaster gesendet, von dem zumindest einen kommunikationsbereiten Datenbusteilnehmer dessen Adresse abgefragt werden soll empfangen, von diesem Datenbusteilnehmer geändert und anschließend wieder an den Lokalbusmaster gesendet. Dabei ist das Ändern des Datenpakets das Einschreiben der Adresse des kommunikationsbereiten Datenbusteilnehmers in das Datenpaket sein. D.h. ein und dasselbe Datenpaket wird von dem Lokalbusmaster gesendet und empfangen, wobei es beim Durchlauf durch den Lokalbus eine Änderung erfährt nämlich genau durch den Datenbusteilnehmer, dessen Adresse abgefragt werden soll. D.h. der Lokalbusmaster sendet das zumindest eine Datenpaket auf den Lokalbus, dieses durchläuft den Lokalbus, wird also zu einer gegebenen Zeit von dem zumindest einen kommunikationsbereiten Datenbusteilnehmer dessen Adresse abgefragt werden soll empfangen, verarbeitet und anschließend weitergeleitet. Hat das zumindest eine Datenpaket alle mit dem Lokalbus verbundenen Datenbusteilnehmer durchlaufen, so empfängt der Lokalbusmaster dieses wieder und kann aus dem Datenpaket die vom kommunikationsbereiten Datenbusteilnehmer geschriebene Adressinformation lesen. Anschließend kann der Lokalbusmaster die Adressinformation der relativen Position zuordnen.

Der Lokalbusmaster kann auch dazu angepasst sein nicht nur ein Datenpaket zu senden, sondern eine Anzahl von Datenpaketen. Dabei kann die Anzahl der Datenpakete der Anzahl von kommunikationsbereiten Datenbusteilnehmern entsprechen. Diese Anzahl kann beispielsweise mit Hilfe eines weiteren Datenpakets bestimmt worden sein. Dieses weitere Datenpaket zum Abzählen kann vor dem Senden des zumindest einen Datenpakets zur Abfrage der Adresse vom Lokalbusmaster auf den Lokalbus gesendet worden sein. Das Datenpaket zum Abzählen kann dementsprechend auch als erstes Datenpaket bezeichnet werden, wohingegen das zumindest eine Datenpaket zur Abfrage der Adresse als zweites Datenpaket bezeichnet werden kann.

Das weitere Datenpaket bzw. das erste Datenpaket kann dabei einen anderen Zählerwert aufweisen, der von dem Zählerwert des zumindest einen Datenpakets bzw. des zweiten Datenpakets verschieden ist. Dieser andere Zählerwert kann von jedem kommunikationsbereiten Datenbusteilnehmer geändert werden, beispielsweise inkrementiert oder dekrementiert werden kann. Dabei kann der andere Zählerwert ein Binärwertzähler sein. Mit anderen Worten, mit einem einzelnen Datenpaket wird zunächst die Anzahl der bereits kommunikationsbereiten Datenbusteilnehmer bestimmt. In dieser Kommunikationsphase ist keine Adressierung der Datenbusteilnehmer nötig. Der Lokalbusmaster kann das Datenpaket zum Abzählen ohne Adressierung auf den Lokalbus senden. Jeder bereits kommunikationsbereite Datenbusteilnehmer kann beim Empfang des einzelnen Datenpakets, den im Datenpaket enthaltenen anderen Zählerwert ändern, bevor das Datenpaket beziehungsweise Teile des Datenpakets an den nächsten Datenbusteilnehmer weitergesendet werden. Noch nicht kommunikationsbereite Datenbusteilnehmer leiten das einzelne Datenpaket nur durch ohne den anderen Zählerwert zu ändern. Ein Datenbusteilnehmer kann dabei kommunikationsbereit sein, wenn dieser taktsynchronisiert ist mit dem Lokalbus und das einzelne Datenpaket empfangen kann und dieses weiterleiten kann und in der Lage ist Verarbeitungen mit dem einzelnen Datenpaket durchzuführen. Handelt es sich bei dem Lokalbus um einen Ringbus, so wird das Datenpaket vom letzten Datenbusteilnehmer, egal ob dieser bereits kommunikationsbereit ist oder nicht an den Lokalbusmaster zurückgeleitet.

Alternativ kann der Ringbus auch durch eine Abschlusseinheit, die auch Brückeneinheit bezeichnet werden kann, geschlossen werden und die Abschlusseinheit kann das in Abwärtsrichtung empfange Datenpaket wieder in Aufwärtsrichtung senden. Dies geschieht entweder erneut durch alle Datenbusteilnehmer hindurch, so dass diese erneut eine Verarbeitung durchführen können, oder vorbei an allen Datenbusteilnehmern über eine Bypassverbindung.

Anhand des anderen Zählerwertes weiß der Lokalbusmaster anschließend, wie viele Datenbusteilnehmer des Lokalbusses bereits kommunikationsbereit sind. Die Datenbusteilnehmer haben dabei in der Reihenfolge in der diese kommunikationsbereit sind den anderen Zählerwert erhöht. Der andere Zählerwert entspricht dabei der relativen Position der jeweiligen kommunikationsbereiten Datenbusteilnehmer, relativ vom Lokalbusmaster aus gesehen. D.h. der erste kommunikationsbereite Datenbusteilnehmer gesehen vom Lokalbusmaster, der den anderen Zählerwert ändert hat dabei die erste relative Position, der zweite kommunikationsbereite Datenbusteilnehmer die zweite relative Position usw. Dabei können physikalisch gesehen zwischen dem Lokalbusmaster und dem ersten kommunikationsbereiten Datenbusteilnehmer eine beliebige Anzahl von nicht kommunikationsbereiten Datenbusteilnehmern oder leeren Lokalbusplätzen angeordnet sein, genauso wie zwischen dem ersten und dem zweiten kommunikationsbereiten Datenbusteilnehmer usw. Die relative Position der kommunikationsbereiten Datenbusteilnehmer ist nur von deren Kommunikationsbereitschaft abhängig.

Hat der andere Zählerwert beispielsweise angezeigt, dass es N kommunikationsbereite Datenbusteilnehmer gibt, so werden auch N Datenpakete erzeugt und auf dem Lokalbus gesendet, um die Adressen der jeweiligen kommunikationsbereiten Datenbusteilnehmer abzufragen. Dabei ist jeweils eins der erzeugten Datenpakete für einen kommunikationsbereiten Datenbusteilnehmer bestimmt und ist diesem basierend auf der jeweiligen relativen Position des kommunikationsbereiten Datenbusteilnehmers innerhalb der Reihenfolge von kommunikationsbereiten Datenbusteilnehmern zugewiesen. Jedes Datenpaket der Anzahl von Datenpaketen ist dabei genau einem Datenbusteilnehmer zugewiesen, der dieses Datenpaket verwendet, zur Adressweitergabe an den Lokalbusmaster.

Dabei weist jedes der Datenpakete einen Zählerwert zur Steuerung der Abfrage auf, mit dem das Datenpaket dem jeweiligen kommunikationsbereiten Datenbusteilnehmer zugewiesen werden kann. Dieser Zählerwert wird also verwendet zur relativen Adressierung der Datenbusteilnehmer. Dabei kann der Zählerwert eines jeden Datenpakets in einem vorbestimmten inkrementellen Zählabstand zu einem Referenzwert gesetzt werden, so dass der Zählabstand einem Positionsabstand innerhalb der Reihenfolge der kommunikationsbereiten Datenbusteilnehmer entspricht. Erkennt ein Datenbusteilnehmer, dass ein Zählerwert eines Datenpakets, der für die relative Adressierung verwendet wird, einem bestimmten Referenzwert entspricht, so erkennt dieser Datenbusteilnehmer, dass das diesen Zählerwert tragende Datenpaket für den Datenbusteilnehmer bestimmt ist. Bei der relativen Adressierung ändert jeder Datenbusteilnehmer den Zählerwert jedes der Anzahl von Datenpaketen. Das Ändern kann dabei ein Inkrementieren oder Dekrementieren des Zählerwertes sein. Der Lokalbusmaster kann dabei angepasst sein, den Zählerwert entsprechend der Anzahl der gezählten Datenbusteilnehmer anzupassen. Außerdem wird jeder Zählerwert eines jeden Datenpakets derart angepasst, dass sich die Zählerwerte jedes Datenpakets unterscheiden und durch die Änderung des Zählerwertes durch die Datenbusteilnehmer, der Zählerwert in jedem Datenpaket einem Referenzwert näher kommt beziehungsweise diesen erreicht und bei nur genau einem kommunikationsbereiten Datenbusteilnehmer einen Referenzwert erreicht. Der Referenzwert kann dabei beispielsweise in allen Datenbusteilnehmern der gleiche Referenzwert sein, so dass sich der zweite Zählerwert von jedem Datenpaket unterscheidet. D.h. der Zählerwert von jedem Datenpaket kann auf einen bestimmten Startwert festgelegt werden, wobei sich der Startwert jedes Datenpakets unterscheiden kann. Erreicht der Zählerwert eines der Datenpakete beim Durchlauf durch den Lokalbus einen Referenzwert an einem kommunikationsbereiten Datenbusteilnehmer, so weiß dieser Datenbusteilnehmer, dass das Datenpaket für diesen Datenbusteilnehmer bestimmt ist. Hierzu kann jeder Datenbusteilnehmer dazu ausgelegt sein, einen Vergleich zwischen dem Zählerwert in jedem Datenpaket und einem Referenzwert durchzuführen. Beispielsweise kann der Zählerwert durch eine Binärdarstellung wiedergegeben werden. Beispielsweise kann das als erstes gesendete Datenpaketen welches auf dem Lokalbus gesendet wird, einen Zählerwert aufweisen, der der höchsten Binärdarstellung des möglichen Wertebereiches für den Zählerwert entspricht. D.h. das als erstes gesendete Datenpaketen weist im Zählerwert nur Einsen auf. Der Wertebereich kann dabei abhängig sein von der maximalen Anzahl an Datenbusteilnehmern, die an den Lokalbus angeschlossen werden können. Inkrementiert der erste Datenbusteilnehmer den Zählerwert des als erstes gesendeten Datenpakets, so erfährt der Zählerwert einen Nulldurchgang, d.h. die Binärdarstellung weist nur Nullen auf. Alternativ kann der Referenzwert auch ein Nulldurchgang von einer Anzahl von Signifikaten letzten Bits sein. Wenn der Referenzwert des ersten Datenbusteilnehmers Null ist. Wenn der Referenzwert Null ist, erkennt der erste Datenbusteilnehmer, dass das als erstes gesendete Datenpaket an den ersten Datenbusteilnehmer gerichtet ist. Das als zweites auf den Lokalbus gesendete Datenpaket kann für den zweiten Datenbusteilnehmer bestimmt sein, d.h. an diesen gerichtet sein. In diesem Datenpaket kann der Lokalbusmaster den Zählerwert auf einen Wert setzen, der durch zwei Datenbusteilnehmer inkrementiert werden kann, bevor dieser einen Nulldurchgang verzeichnet. Das als zweites gesendete Datenpaket kann also vom ersten Datenbusteilnehmer inkrementiert werden und wird von diesem auf die höchste Binärdarstellung inkrementiert, d.h. auf einen Wert der nur Einsen aufweist. Da aber kein Nulldurchgang verzeichnet wurde, weiß der erste Datenbusteilnehmer, dass dieses Datenpaket nicht für den ersten Datenbusteilnehmer bestimmt ist und sendet es weiter auf dem Lokalbus an den nächsten kommunikationsbereiten Datenbusteilnehmer. Dieser inkrementiert wiederum den bereits inkrementierten Zählerwert. Hierbei wird ein Nulldurchgang verzeichnet, so dass der zweite kommunikationsbereite Datenbusteilnehmer weiß, dass dieses als zweites gesendete Datenpaket für den zweiten Datenbusteilnehmer bestimmt ist. Auf diese Weise kann der Lokalbusmaster alle Datenpakete der Anzahl von Datenpakete über den Zählerwert und dessen Erreichen eines Referenzwertes den jeweiligen kommunikationsbereiten Datenbusteilnehmern zuweisen beziehungsweise an die jeweiligen Datenbusteilnehmer adressieren. Dabei ist dem Fachmann klar, dass auch wenn hier das Inkrementieren beschrieben ist und als Referenzwert ein Nulldurchgang angenommen wird, dies auch über ein Dekrementieren und einen Einsdurchgang bewerkstelligt werden kann. D.h. der Zählerwert des ersten von den Datenpaketen wird auf Null gesetzt, wird dieser dekrementiert, so springt der Zählerwert auf nur Einsen. Das zweite von den Datenpaketen enthält dann entsprechend als Startwert für den Zählerwert eine Eins etc. Des Weiteren ist dem Fachmann bewusst, dass auch andere Abzählmechanismen verwendet werden können, und der Zählerwert entsprechend eingerichtet werden kann, um diesen Abzählmechanismen zu entsprechen und der Zählerwert nur genau einmal einen Referenzwert an einem kommunikationsbereiten Datenbusteilnehmer annimmt, so dass sich eine eineindeutige Zuweisung der Datenpakete ergibt. Wenn ein Datenbusteilnehmer erkennt, dass ein Datenpaket an den Datenbusteilnehmer gerichtet ist, weil der Zählerwert in diesem Datenpaket einen Referenzwert erreicht hat, der einem im Datenbusteilnehmer gespeicherten Referenzwert entspricht, so kann der Datenbusteilnehmer in dem Datenbusteilnehmer gespeicherte Informationen in ein Feld des Datenpakets schreiben. Beispielsweise kann der Datenbusteilnehmer seine Adresse in ein Adressdatenfeld schreiben. Auf diese Weise kann der Lokalbusmaster Informationen über die Datenbusteilnehmer sammeln, die zur Bestimmung der mit dem Lokalbus verbundenen Datenbusteilnehmer dienen können. D.h. der Lokalbusmaster kann ein Datenpaket einem Datenbusteilnehmer zuweisen, indem der Zählerwert von jedem Datenpaket entsprechend gesetzt wird, so dass beim Erreichen eines Referenzwertes, der Datenbusteilnehmer weiß, dass das entsprechende Datenpaket an den Datenbusteilnehmer gerichtet ist.

In einer weiteren bevorzugten Ausführungsform des erfindungsgemäßen Verfahrens, wird das Senden des zumindest einen Datenpakets zur Abfrage der Adresse zumindest eines kommunikationsbereiten Datenbusteilnehmers und / oder eines anderen Datenpakets zum Abzählen der kommunikationsbereiten Datenbusteilnehmer so lange wiederholt, bis ein Statussignal an einem Statussignaleingang des Lokalbusmasters signalisiert, dass alle mit dem Lokalbus verbundenen Datenbusteilnehmer kommunikationsbereit sind. Dabei kann das Statussignal von jedem Datenbusteilnehmer vom letzten Datenbusteilnehmer zum Lokalbusmaster bedingt geändert werden. Bedingt in diesem Fall bedeutet, dass ein Datenbusteilnehmer das Statussignal beziehungsweise den Zustand des Statussignals erst dann ändert, wenn der Datenbusteilnehmer selbst kommunikationsbereit ist und an seinem Statussignaleingang angezeigt wird, dass auch die nachfolgenden Datenbusteilnehmer kommunikationsbereit sind. Auf diese Weise liegt ein definierter Zustand des Statussignals oder ein definiertes Statussignal erst dann am Lokalbusmaster an, wenn alle Datenbusteilnehmer im Lokalbus kommunikationsbereit sind. Das Statussignal kann dabei diskrete Zustände annehmen. Dabei kann eine logische Eins (High-Zustand) anzeigen, dass noch nicht alle Datenbusteilnehmer am Lokalbus kommunikationsbereit sind und eine logische Null (Low-Zustand) kann anzeigen, dass alle Datenbusteilnehmer des Lokalbusses kommunikationsbereit sind. Dem Fachmann ist aber auch bewusst, dass die Kommunikationsbereitschaft durch andere logische Zustände angezeigt werden kann. Dabei nimmt jeder Datenbusteilnehmer zunächst den Zustand des Statussignals an, der anzeigt, dass keine Kommunikationsbereitschaft besteht. Entweder der letzte Datenbusteilnehmer oder eine Abschlusseinheit des Lokalbusses nimmt als erstes einen Zustand ein, der die Kommunikationsbereitschaft anzeigt. Dieser Zustand des Statussignals wird an den vorgelagerten Datenbusteilnehmer weitergeleitet und an dessen Statussignaleingang empfangen. Erst wenn dieser Datenbusteilnehmer ebenfalls kommunikationsbereit ist, ändert dieser Datenbusteilnehmer den Zustand des Statussignals an seinem Statussignalausgang und leitet damit das Statussignal an den nächsten Datenbusteilnehmer weiter. Auch dieser ändert wiederum nur den Zustand an seinem Statussignalausgang, wenn am Statussignaleingang angezeigt wird, dass die nachfolgenden Datenbusteilnehmer bereits kommunikationsbereit sind und der Datenbusteilnehmer selbst kommunikationsbereit ist. Auf diese Weise ändert sich der Zustand des Statussignals am Lokalbusmaster nur, wenn alle Datenbusteilnehmer des Lokalbusses kommunikationsbereit sind. So lange dieser Zustand noch nicht eingetreten ist, kann der Lokalbusmaster die bereits kommunikationsbereiten Datenbusteilnehmer mit Hilfe eines einzelnen auf den Lokalbus gesendeten Datenpaktes abfragen und mit Hilfe der Anzahl von Datenpaketen von diesen kommunikationsbereiten Datenbusteilnehmern bereits die Adressen abfragen. Wenn sich der Zustand des Statussignals ändert, hat der Lokalbusmaster Kenntnis darüber, dass alle gezählten Datenbusteilnehmer nunmehr kommunikationsbereit sind und dem Lokalbusmaster alle Adressinformationen vorliegen. Der Lokalbusmaster kann in diesem Fall aber dennoch wiederum ein einzelnes Datenpaket auf den Lokalbus senden, um zu überprüfen ob die zuvor gesammelten Informationen korrekt sind und die Zustandsänderung des Statussignals nicht auf einem Fehler beruht.

Die oben genannte Aufgabe wird auch gelöst durch einen Lokalbusmaster eines Lokalbusses, in Form eines Ringbusses, der Lokalbusmaster weist auf ein Mittel zum Empfangen zumindest eines Datenpakets von einem kommunikationsbereiten Datenbusteilnehmer, wobei das zumindest eine Datenpaket eine Adresse von dem einen kommunikationsbereiten Datenbusteilnehmer aufweist, wobei der kommunikationsbereite Datenbusteilnehmer innerhalb einer Reihenfolge von kommunikationsbereiten Datenbusteilnehmern ist und ein Mittel zum Zuordnen der empfangenen Adresse zu einer relativen Position des kommunikationsbereiten Datenbusteilnehmers innerhalb der Reihenfolge der kommunikationsbereiten Datenbusteilnehmer. Dabei kann das Mittel zum Empfangen eine Receiver- oder Transceiverschaltung sein. Das Mittel zum Zuordnen kann ein Prozessor, ein Mikrocontroller oder eine Rechenschaltung sein. Die Rechenschaltung kann als digitale Logik ausgebildet sein, die insbesondere zumindest als ein Teil eines Halbleiterchips ausgebildet ist. Die Schaltungen können in einem anwendungsspezifischen integrierten Schaltkreis (*engl.* ASIC) oder in einer Feld programmierbaren (Logik-)Gatter-Anordnung (*engl.* FPGA) implementiert sein.

Der Lokalbusmaster weist weiter ein Mittel zum Senden des zumindest einen Datenpakets an alle Datenbusteilnehmer zur Abfrage der Adresse des zumindest einen kommunikationsbereiten Datenbusteilnehmers auf sowie vorzugsweise ein Mittel zum Senden eines anderen Datenpakets an alle Datenbusteilnehmer zum Abzählen der kommunikationsbereiten Datenbusteilnehmer in der Reihenfolge, wobei das andere Datenpaket zum Abzählen vor dem zumindest einen Datenpaket zur Abfrage der Adresse gesendet wird und wobei das andere Datenpaket einen weiteren Zählerwert aufweist, der von jedem kommunikationsbereiten Datenbusteilnehmer in der Reihenfolge geändert wird. Das Mittel zum Senden kann dabei eine Sender- oder Transceiverschaltung sein, die als ASIC oder FPGA implementiert sein kann.

Das Mittel zum Senden des zumindest einen Datenpakets zur Abfrage der Adresse des zumindest einen kommunikationsbereiten Datenbusteilnehmers kann auch angepasst sein zum Senden einer Anzahl von Datenpaketen, wobei die Anzahl der Datenpakete der Anzahl der kommunikationsbereiten Datenbusteilnehmer entsprechen kann. Das Mittel zum Senden des zumindest einen Datenpakets beziehungsweise der Anzahl von Datenpaketen kann dabei das gleiche Mittel sein wie das Mittel zum Senden des anderen Datenpakets. Das Mittel zum Senden kann eine Sender- oder Transceiverschaltung sein, die als ASIC oder FPGA implementiert sein kann.

In einer bevorzugten Ausführungsform des erfindungsgemäßen Lokalbusmasters weist dieser weiter ein Mittel zum Bilden des zumindest einen Datenpakets zur Abfrage der Adresse und des anderen Datenpakets zum Abzählen auf. Dabei kann das Mittel zum Bilden angepasst sein, die Datenpakete entsprechend des auf dem Lokalbus verwendeten Formats zu formatieren. Beispielsweise kann das Mittel zum Bilden zumindest einen Zyklusrahmen erzeugen, der die entsprechenden Datenpakte aufweist und die Mittel zum Senden können diesen Zyklusrahmen auf den Lokalbus senden. Alternativ können das Datenpaket zum Abzählen und das zumindest eine Datenpaket zur Abfrage der Adresse auch in unterschiedlichen Zyklusrahmen gesendet werden, wobei das Mittel zum Bilden die jeweiligen Zyklusrahmen bildet.

In einer weiteren bevorzugten Ausführungsform weist der erfindungsgemäße Lokalbusmaster einen Statussignaleingang auf zum Empfangen eines Statussignals, wobei das Statussignal beziehungsweise der Zustand des Statussignals signalisiert, ob alle mit dem Lokalbus verbundenen Datenbusteilnehmer kommunikationsbereit sind. Weiter können das Mittel zum Senden des zumindest einen Datenpakets zur Abfrage der Adresse und /oder das Mittel zum Senden des Datenpakets zum Abzählen angepasst sein das Senden der Datenpakete so lange zu wiederholen, bis ein Zustand des Statussignals an dem Statussignaleingang anzeigt, dass alle mit dem Lokalbus verbundenen Datenbusteilnehmer kommunikationsbereit sind.

Die hier beschriebenen auf dem Lokalbus übertragenen Datenpakete können auch als Telegramme bezeichnet werden. Die Datenpakete können auch als Kommunikationsdatenpakete bezeichnet werden, die und insbesondere zum Programmieren und/oder zum Steuern und/oder zum Überwachen und/oder zum Identifizieren zumindest eines Datenbusteilnehmers dienen. Das zumindest eine Datenpaket zur Abfrage der Adresse und das andere Datenpaket zum Abzählen können auch vom gleichen Typ sein. D.h. das Datenpaket zum Abzählen und das Datenpaket zur Abfrage der Adresse können sich beispielsweise nur dadurch unterscheiden, wann diese auf den Lokalbus gesendet werden. Dabei wird vorzugsweise zunächst das Datenpaket zum Abzählen gesendet bevor das zumindest eine Datenpaket zur Abfrage der Adresse gesendet wird, so dass die Anzahl der Datenpakete zur Adressabfrage der Anzahl der durch das zuvor gesendete Datenpaket abgezählten Datenbusteilnehmer angepasst werden kann.

Die oben genannte Aufgabe wird auch durch ein System gelöst bestehend aus einem Lokalbusmaster und zumindest einem Datenbusteilnehmer. Der Lokalbusmaster un der zumindest ein Datenbusteilnehmer sind dabei angepasst und weisen die entsprechenden Mittel auf, um das oben beschriebene Verfahren zur Bestimmung von kommunikationsbereiten Datenbusteilnehmern zu implementieren. Dabei können die entsprechenden Mittel entsprechend der im Verfahren beschriebenen Funktion im Lokalbusmaster oder im zumindest einen Datenbusteilnehmer angeordnet sein.

### 4. Kurze Beschreibung der Zeichnungen

Die Erfindung wird nachfolgend anhand von Ausführungsbeispielen mit den beigefügten Zeichnungen näher erläutert. Aus dem beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung, einem übergeordneten Bus, und mehreren beispielhaften erfindungsgemäßen Datenbusteilnehmern;
- Fig. 2: ein exemplarisches Datenpaket;
- Fig. 3: das Senden eines einzelnen Datenpakets durch die in Figur 1 gezeigten Datenbusteilnehmer zum Abzählen der Datenbusteilnehmer; und
- Fig. 4a/b: das Senden einer Anzahl von Datenpaketen durch die in Figur 1 gezeigten Datenbusteilnehmer zur Adressabfrage der Datenbusteilnehmer.

### 5. Beschreibung bevorzugter Ausführungsbeispiele

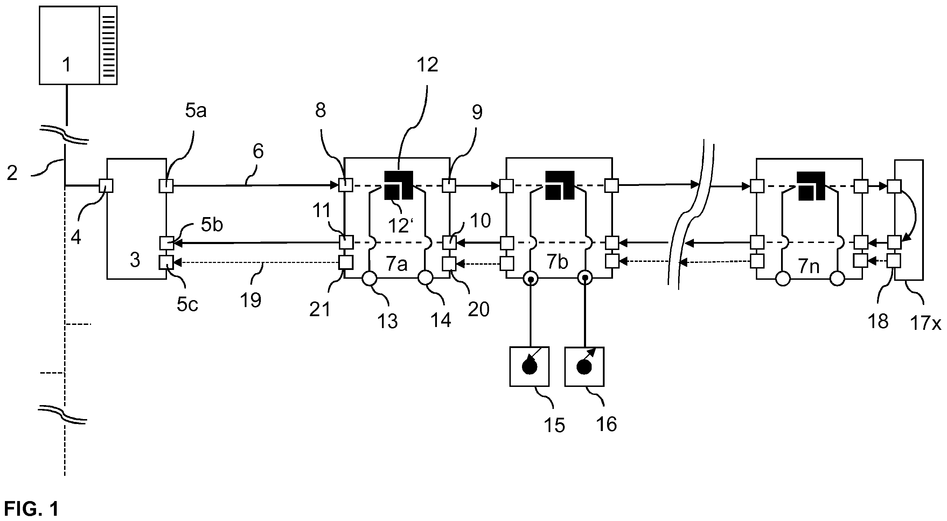

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten und/oder zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch ein Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder auch optische Verbindung mittels entsprechender Komponenten herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

Des Weiteren weisen die Datenbusteilnehmer 7a, 7b, ..., 7n in dem in Figur 1 gezeigten Ausführungsbeispiel auch eine Verarbeitungseinheit 12 auf, die aus einer Verarbeitungskomponente und einer Logikeinheit besteht. Die Verarbeitungseinheit 12 kann auch als Gesamtschaltung des Datenbusteilnehmers bezeichnet werden. D.h. die Verarbeitungseinheit 12 empfängt Daten über die Eingänge 8 und 10 und gibt Daten auf den Ausgängen 9 und 11 aus. Des Weiteren kann die Verarbeitungseinheit 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, 7n können auf diese Moduleinheit aufgesteckt werden. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation.

Ein Zyklusrahmen kann dabei beispielsweise als ein wiederkehrendes (zyklisches) vorzugsweise äquidistantes Zeitintervall, in dem Daten auf dem Ringbus 6 übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung von Datenpaketen vorgesehen. Die Startkennung (SOC) und die Datenpakete werden über den Ringbus 6 übertragen und durchlaufen alle Datenbusteilnehmer. Die Startkennung (SOC) ist separat, also als eigenständiges Symbol, übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Lokalbus. Das Signal ermöglicht es den Datenbusteilnehmern, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen.

Das Datenpaket durchläuft dementsprechend einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welches vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Wie bereits oben beschrieben zeigt das Ausführungsbeispiel der Figur 1 die Abschlusseinheit 17x, die mit Datenbusteilnehmer 7n verbunden ist. Die Abschlusseinheit 17x verbindet die Schnittstellen 9 und 10 des Datenbusteilnehmers 7n, so dass der in Abwärtsrichtung geleitete Zyklusrahmen beziehungsweise die Datenpakete wieder durch alle Datenbusteilnehmer 7a, 7b, ..., 7n in umgekehrter Reihenfolge an den Lokalbusmaster 3, also in Aufwärtsrichtung, gesendet werden. Der Zyklusrahmen beziehungsweise die Datenpakete oder die die Teile der Datenpakete können in Aufwärtsrichtung dabei erneut von den Datenbusteilnehmern 7a, 7b, ..., 7n verarbeitet werden oder können ohne weitere Verarbeitung nur durch die Datenbusteilnehmer 7a, 7b, ..., 7n geschleift werden. Die Abschlusseinheit 17x stellt des Weiteren an ihrem Statussignalausgang 18 ein Statussignal bereit, welches einen vorher definierten Statussignalwert beziehungsweise Zustand aufweist. Dieses Statussignal beziehungsweise der Statussignalwert der Abschlusseinheit 17x wird am Datenbusteilnehmer 7n an dessen Statussignaleingang 20n empfangen. Wenn der Datenbusteilnehmer 7n kommunikationsbereit ist, also wenn der Datenbusteilnehmer 7n taktsynchronisiert ist mit dem Lokalbus 6 und die Verarbeitungseinheit 12n in der Lage ist Datenpakete zu verarbeiten, dann ändert der Datenbusteilnehmer 7n seinen Statussignalwert an seinem Statussignalausgang 21n auf einen Statussignalwert, der die Kommunikationsbereitschaft anzeigt. Dabei kann der Statussignalwert beziehungsweise dessen Zustand beispielsweise vor der Kommunikationsbereitschaft ein Low-Zustand annehmen und nach der Herstellung der Kommunikationsbereitschaft ein High-Zustand annehmen. Der Statussignalwert kann also dementsprechend von einer logischen Null auf eine logische Eins gesetzt werden. Dem Fachmann ist aber bewusst, dass auch andere Zustände oder Statussignalwerte definiert werden können, die die Kommunikationsbereitschaft anzeigen. Es ist nur wichtig, dass es einen Wechsel des Statussignalwertes am Statussignalausgang gibt, wenn die Kommunikationsbereitschaft hergestellt ist. Alternativ zu der hier dargestellten Abschlusseinheit 17x kann auch der Datenbusteilnehmer 7n selbst die Funktionalität der Abschlusseinheit 17x übernehmen. D.h. wenn der Datenbusteilnehmer 7n feststellt, dass dieser der letzte Datenbusteilnehmer des Lokalbusses 6 ist und feststellt, dass keine Abschlusseinheit 17x angeschlossen ist, so kann der Datenbusteilnehmer 7n selbst die auf der Abwärtsrichtung empfangenen Datenpakete wieder in Aufwärtsrichtung senden. Der Datenbusteilnehmer 7n kann dementsprechend angepasst sein in diesem Fall eine Verbindung zwischen der Schnittstelle 9 und der Schnittstelle 10 herzustellen. Des Weiteren kann der Datenbusteilnehmer 7n in diesem Fall angepasst sein, an seinem Statussignalausgang 21n nach Herstellung seiner Kommunikationsbereitschaft einen Statussignalwertwechsel durchzuführen, auch wenn kein Statussignalwert an seinem Statussignaleingang 20n anliegt.

Mit der Änderung des Statussignalwertes am Statussignalausgang 21n liegt am Datenbusteilnehmer 7b an dessen Statussignaleingang 20b ein Statussignalwert an, der anzeigt, dass der Datenbusteilnehmer 7n kommunikationsbereit ist. Da dieser Statussignalwert der gleiche Statussignalwert ist, der von der Abschlusseinheit 17x ausgegeben wird - wenn diese vorhanden ist -, kann auch gesagt werden, dass das Statussignal durch den Datenbusteilnehmer 7n geleitet wird, wenn dieser kommunikationsbereit ist. Entsprechend wird das Statussignal auch durch die anderen Datenbusteilnehmer 7a, 7b geleitet, wenn diese kommunikationsbereit sind. Sind alle Datenbusteilnehmer 7a, 7b, ..., 7n kommunikationsbereit, so kann gesagt werden, dass eine Statussignalleitung zwischen der Abschlusseinheit 17x mit deren Statussignalausgang 18 und dem Lokalbusmaster 3 mit dessen Statussignaleingang 5c besteht. Diese Statussignalleitung kann physikalisch eine Leitung sein, die durch Schalter oder Koppler eine elektrische oder optische Verbindung zwischen dem Statussignalausgang 18 und dem Statussignaleingang 5c herstellt. Diese Statussignalleitung kann das originär von dem Statussignalausgang 18 stammende Statussignal an den Statussignaleingang 5c leiten. Wie bereits oben beschrieben, kann diese Signalleitung auch nur eine Verbindung zwischen dem Statussignalausgang 21n des letzten Datenbusteilnehmers 7n und dem Statussignaleingang 5c darstellen, nämlich in dem Fall, in dem keine Abschlusseinheit 17x vorhanden ist. Alternativ zu dem Herstellen einer physikalischen Verbindung, kann die Signalleitung auch nur organisatorisch bestehen und jeder Datenbusteilnehmer 7a, 7b, ..., 7n fungiert als Repeater des an seinem Statussignaleingang 20a, 20b, ..., 20n anliegenden Statussignalwertes und erzeugt den gleichen Statussignalwert an seinem Statussignalausgang 21a, 21b, ..., 21n, wenn der Datenbusteilnehmer 7a, 7b, ..., 7n kommunikationsbereit ist und der Statussignalwert am Statussignaleingang 20a, 20b, ..., 20n anzeigt, dass die nachgelagerten Datenbusteilnehmer auch kommunikationsbereit sind. In diesem Fall kann auch von einer Statussignalleitung gesprochen werden, weil auch in diesem Fall der Statussignalwert des Statussignalausgangs 18 der Abschlusseinheit 17x beziehungsweise der Statussignalwert des Statussignalausgangs 21n des letzten Datenbusteilnehmers 7n an den Statussignaleingang 5c des Lokalbusmasters 3 weitergeleitet wird, auch wenn keine direkte physikalische Verbindung zwischen dem Statussignalausgang 18 der Abschlusseinheit 17x beziehungsweise dem Statussignalausgang 21n des Datenbusteilnehmers 7n und dem den Statussignaleingang 5c des Lokalbusmasters 3 besteht. In dem Fall einer nur organisatorischen Statussignalleitung kann auch davon gesprochen werden, dass eine physikalische Verbindung nur zwischen jeweils zwei Datenbusteilnehmern 7a, 7b, ..., 7n besteht aber keine physikalische Verbindung zwischen allen Datenbusteilnehmern 7a, 7b, ..., 7n.

Auch wenn die Statussignalleitung in dem hier gezeigten Ausführungsbeispiel ähnlich wie der Lokalbus 6 dargestellt ist, so ist die Statussignalleitung separat vom Lokalbus 6. D.h. das Statussignal wird nicht über eine Busleitung, die ausgelegt ist Daten zu tragen, propagiert.

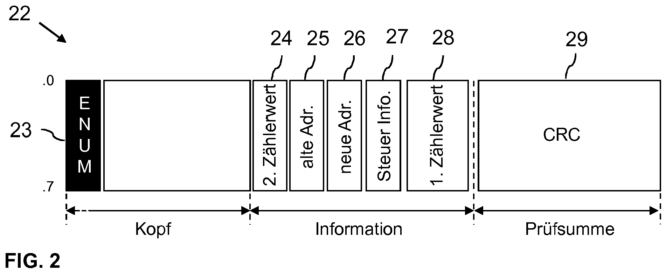

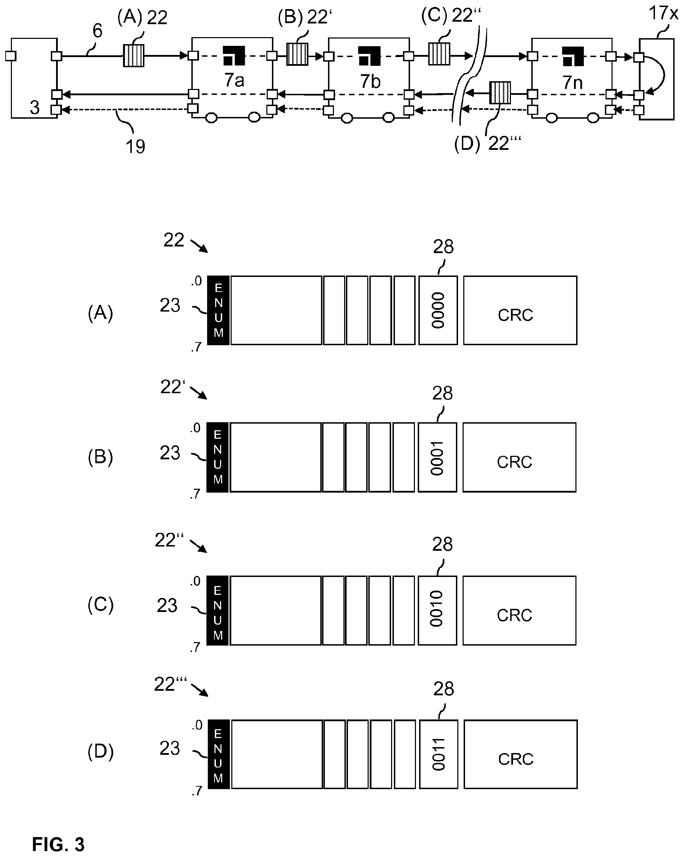

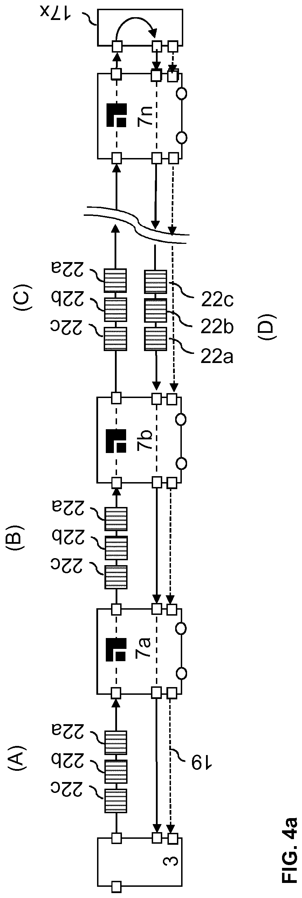

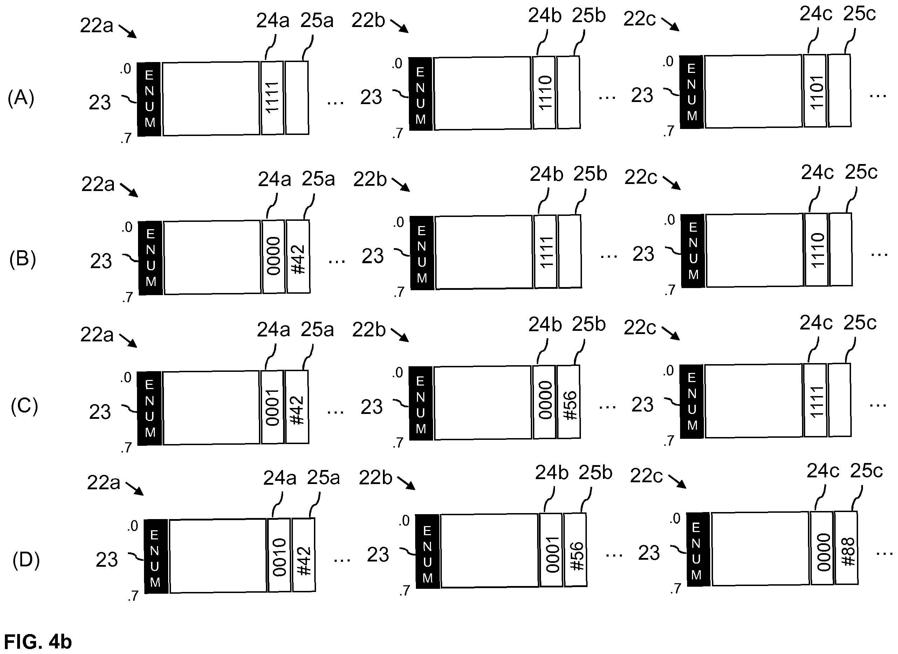

Damit der Lokalbusmaster 3 die bereits kommunikationsbereiten Datenbusteilnehmer 7a, 7b, ..., 7n bestimmen kann fragt dieser die Adressen der kommunikationsbereiten Datenbusteilnehmer 7a, 7b, ..., 7n ab und wiederholt dies so lange, bis das Statussignal beziehungsweise der Statussignalwert des Statussignals beziehungswiese der Zustand des Statussignals am Statussignaleingang 5c des Lokalbusmasters 3 signalisiert, dass alle an den Lokalbus 6 angeschlossenen Datenbusteilnehmer 7a, 7b, ..., 7n kommunikationsbereit sind. Hierzu verwendet der Lokalbusmaster 2 erste und zweite Datenpakete. Ein beispielhaftes Datenpaket ist in Figur 2 gezeigt. Die Figuren 3 und 4 zeigen beispielhaft die Adressabfrage mit Hilfe des in Figur 2 gezeigten Datenpakets.

Das in Figur 2 exemplarisch gezeigte Datenpaket 22 besteht aus einem allgemeinen Kopfteil - der auch Header genannt werden kann -, einem Informationsteil - der auch Payload bezeichnet werden kann - sowie einem Prüfsummenteil - der auch Prüfsumme bezeichnet werden kann.

Der Kopfteil beinhaltet ein Feld 23, welches ein eindeutiges nur einmal auftretendes Bitmuster ENUM enthält, welches auch als Codewort oder Kennung bezeichnet werden kann. Die Anzahl und die Ausgestaltung von eindeutigen Bitmustern beziehungsweise Codewörtern hängen ab von der auf dem Lokalbus 6 verwendeten Kodierung. Alternativ oder zusätzlich können aber auch spezielle Bitmuster oder Codewörter in dem verwendeten Busprotokoll definiert werden. Es ist dabei nur von Bedeutung, dass die Datenbusteilnehmer 7a, 7b, ..., 7n eineindeutig aus dem Bitmuster beziehungsweise Codewort des Feldes 23 erkennen können, um welche Art von Datenpaket 22 es sich handelt. In dem hier gezeigten Ausführungsbeispiel haben die Datenbusteilnehmer 7a, 7b, ..., 7n Kenntnis darüber, dass wenn ein Feld 23 mit einem Bitmuster ENUM empfangen wird, dass es sich um ein Datenpaket 22 für den Prozess der Adressabfrage handelt.

Der Kopfteil kann auch noch weitere Informationen beinhalten, die zur Steuerung oder Überprüfung des Datenpakets 22 und der darin enthaltenen Daten verwendet werden kann. Dem Fachmann sind dabei eine Vielzahl von Feldern bekannt, die im Kopfteil enthalten sein können.

Der Informationsteil des Datenpakets 22 weist mehrere Felder auf, die zur Bestimmung sowie Zwischenbestimmung verwendet werden können. Das Datenpaket 22 weist dabei einen ersten Zählerwert 28 und einen zweiten Zählerwert 24 auf. Der erste Zählerwert 28 wird dabei verwendet, um die kommunikationsbereiten Datenbusteilnehmer 7a, 7b, ..., 7n auf dem Lokalbus 6 abzuzählen. Dabei wird der erste Zählerwert 28 von jedem Datenbusteilnehmer 7a, 7b, ..., 7n der kommunikationsbereit ist, d.h. von jedem Datenbusteilnehmer 7a, 7b, ..., 7n, der das Datenpaket 22 verarbeiten kann, geändert. Dieses Ändern kann in einem inkrementieren oder dekrementieren des Zählerwertes 28 bestehen. Wenn das Datenpaket 22 den Lokalbus 6 durchlaufen hat, also wieder am Lokalbusmaster 3 angekommen ist, hat dieser Kenntnis darüber, wie viele kommunikationsbereite Datenbusteilnehmer 7a, 7b, ..., 7n am Lokalbus 6 angeschlossen sind. Des Weiteren weist das Datenpaket 22 auch einen zweiten Zählerwert 24 auf, der zur Zuweisung des Datenpakets 22 an die kommunikationsbereiten Datenbusteilnehmer 7a, b, ..., 7n dient, wie im Folgenden in Hinblick auf die Figuren 3 und 4 näher erläutert wird.

Des Weiteren weist das Datenpaket 22 ein Feld 25 auf, welches von den Datenbusteilnehmern 7a, 7b, ..., 7n verwendet werden kann, um ihre gespeicherte Adresse an den Lokalbusmaster 3 zu kommunizieren. Dieses Feld 25 kann auch als Adressdatenfeld bezeichnet werden. Auch weist das Datenpaket 22 ein Feld 26 auf mit der der Lokalbusmaster 3 den Datenbusteilnehmern 7a, 7b, ..., 7n eine neue Adresse zuweisen kann. Des Weiteren kann das Datenpaket 22 auch noch ein weiteres Feld 27 aufweisen, welches Steuerinformation für die jeweiligen Datenbusteilnehmer 7a, 7b, ..., 7n tragen kann. Es ist dem Fachmann bewusst, dass auch wenn hier eine spezielle Reihenfolge und Anzahl der Felder 24 bis 28 vorgegeben ist, auch von dieser Anordnung und Anzahl der Felder abgewichen werden kann, ohne vom Gegenstand der Erfindung abzuweichen.

In dem hier gezeigten Ausführungsbeispiel ist das Datenpaket 22 in Symbole von jeweils 8 Bit eingeteilt. Das Datenpaket 22 wird auch in dieser Stückelung von den Datenbusteilnehmer 7a, 7b, ..., 7n empfangen und verarbeitet. D.h. als erstes sendet der Lokalbusmaster 3 das Symbol beziehungsweise Feld ENUM 23 an den ersten Datenbusteilnehmer 7a, nach einer vorher bestimmten Zeit, sendet der Lokalbusmaster 3 ein weiteres Symbol des Kopfteiles des Datenpakets 22 an den Datenbusteilnehmer 7a, dieser wiederum sendet gleichzeitig das Symbol beziehungsweise Feld ENUM 23 an den Datenbusteilnehmer 7b. In dieser Weise durchlaufen alle Teile des Datenpakets 22 die jeweiligen Datenbusteilnehmer 7a, 7b, ..., 7n, wobei zu jeder gegebenen Zeit jeder Datenbusteilnehmer 7a, 7b, ..., 7n immer nur ein Stück beziehungsweise Teil des Datenpakets 22 vorhält und damit verarbeiten kann.

Figur 3 zeigt exemplarisch die Initialisierung des Lokalbusses 6. In dem hier gezeigten Ausführungsbeispiel sind alle Datenbusteilnehmer 7a, 7b, ..., 7n bereits kommunikationsbereit, was auch durch die Vollständigkeit der Statussignalleitung 19 angezeigt wird. Zu einer gegebenen Zeit sendet der Lokalbusmaster 3 ein Datenpaket 22 symbolweise an den kommunikationsbereiten Datenbusteilnehmer 7a. Dies ist mit dem Datenpaket 22 an Position (A) des Lokalbusses 6 angedeutet. D.h. der Datenbusteilnehmer 7a empfängt zunächst das Feld 23 des Datenpakets 22 mit dem eineindeutigen Bitmuster und hat Kenntnis darüber, dass nun eine Initialisierung stattfindet. Wenn dann das Feld 28 am Datenbusteilnehmer 7a empfangen wird, kann dieser eine Verarbeitung damit durchführen, nämlich den Wert dieses Feldes 28 ändern. In dem hier gezeigten Ausführungsbeispiel weist das Feld 28 einen Binärwert auf und der Datenbusteilnehmer 7a inkrementiert den Binärwert. In dem hier gezeigten Ausführungsbeispiel wurde der Zählerwert 28 vom Lokalbusmaster 3 auf 0000 gesetzt und der Datenbusteilnehmer 7a hat diesen Wert um einen inkrementiert auf 0001. D.h. dass nach dem Durchlauf durch den Datenbusteilnehmer 7a sich das Datenpaket von dem Datenpaket 22 unterscheidet, welches vom Lokalbusmaster 3 gesendet wurde, dies ist in dem hier gezeigten Ausführungsbeispiel im weiteren mit der Kennzeichnung des Datenpakets als Datenpaket 22' gezeigt. Der Datenbusteilnehmer 7a selbst sendet auch symbolweise das Datenpaket 22' weiter an den nächsten Datenbusteilnehmer 7b. Dies ist mit dem Datenpaket 22' an Position (B) des Lokalbusses 6 angedeutet.

Sobald der Datenbusteilnehmer 7b das Feld 28 des Datenpakets 22' empfängt wird dieses erneut inkrementiert. In dem hier gezeigten Ausführungsbeispiel also von 0001 auf 0010. D.h. dass nach dem Durchlauf durch den Datenbusteilnehmer 7b sich das Datenpaket von dem Datenpaket 22' unterscheidet, welches vom Datenbusteilnehmer 7a gesendet wurde, dies ist in dem hier gezeigten Ausführungsbeispiel im weiteren mit der Kennzeichnung des Datenpakets als Datenpaket 22" gezeigt. Der Datenbusteilnehmer 7b selbst sendet auch symbolweise das Datenpaket 22" weiter an den nächsten Datenbusteilnehmer 7n. Dies ist mit dem Datenpaket 22" an Position (C) des Lokalbusses 6 angedeutet.

Sobald der Datenbusteilnehmer 7n das Feld 28 des Datenpakets 22" empfängt wird dieses erneut inkrementiert. In dem hier gezeigten Ausführungsbeispiel also von 0010 auf 0011. D.h. dass nach dem Durchlauf durch den Datenbusteilnehmer 7n sich das Datenpaket von dem Datenpaket 22"unterscheidet, welches vom Datenbusteilnehmer 7b gesendet wurde, dies ist in dem hier gezeigten Ausführungsbeispiel im weiteren mit der Kennzeichnung des Datenpakets als Datenpaket 22‴ gezeigt. Der Datenbusteilnehmer 7b selbst sendet auch symbolweise das Datenpaket 22‴ weiter an die Abschlusseinheit 17x. Diese verbindet die Schnittstelle 9n mit der Schnittstelle 10n des Datenbusteilnehmers 7n, so dass das gesendete Datenpaket 22‴ in Aufwärtsrichtung wieder an den Lokalbusmaster 3 gesendet wird und zwar durch alle Datenbusteilnehmer 7a, 7b, ..., 7n hindurch. Dies ist mit dem Datenpaket 22‴ an Position (D) des Lokalbusses 6 angedeutet. In dem hier gezeigten Ausführungsbeispiel wird dabei keine erneute Verarbeitung des Datenpakets 22‴ durchgeführt.

Der Lokalbusmaster 3 kann dann den Zählerwert 28 aus dem Datenpaket 22‴ auslesen und kann dadurch erfahren, wie viele kommunikationsbereite Datenbusteilnehmer 7a, 7b, ... 7n am Lokalbus 6 vorhanden sind.

Anschließend erzeugt der Lokalbusmaster 3 erneut Datenpakete 22 in der Anzahl der durch den ersten Zähler 28 angezeigten kommunikationsbereiten Datenbusteilnehmer 7a, 7n, ..., 7n, dies ist in Figur 4 gezeigt.

Der Lokalbusmaster 3 erzeugt in dem hier gezeigten Ausführungsbeispiel entsprechend des Zählerwertes 28 drei Datenpakete 22a, 22b, 22c. Jedes Datenpaket 22a, 22b, 22c weist einen Zählerwert 24a, 24b, 24c auf. Mit Hilfe dieses Zählerwertes 24a, 24b, 24c werden die drei Datenpakete 22a, 22b, 22c an die kommunikationsbereiten Datenbusteilnehmer 7a, 7b, ..., 7n zugewiesen. Hierfür setzt der Lokalbusmaster 3 den Zählerwert 24a des ersten Datenpakets 22a auf die höchste Binärdarstellung, die der Zählerwert 24a annehmen kann, in dem hier gezeigten Ausführungsbeispiel auf 1111 oder auf einen anderen beliebigen Startwert. Der Zählerwert 24b des zweiten Datenpakets 22b wird auf einen um einen im Vergleich zum Datenpaket 22a erniedrigten Wert gesetzt, hier auf 1110. Der Zählerwert 24c des dritten Datenpakets 22c wird auf einen um einen im Vergleich zum Datenpaket 22b erniedrigten Wert gesetzt, hier auf 1101.

Anschließend werden die Datenpakete 22a, 22b, 22c vom Lokalbusmaster 3 an den ersten Datenbusteilnehmer 7a gesendet. Dies ist mit den Datenpaketen 22a, 22b, 22c an Position (A) des Lokalbusses 6 angedeutet.

Der erste Datenbusteilnehmer 7a empfängt symbolweise die drei Datenpakete 22a, 22b, 22c. Dabei inkrementiert der Datenbusteilnehmer 7a jeweils den Zählerwert 24a, 24b, 24c der drei Datenpakete 22a, 22b, 22c. Stellt der Datenbusteilnehmer 7a beim Inkrementieren von einem von den Zählerwerten 24a, 24b, 24c fest, dass es einen Nulldurchgang gibt, springt also der Zählerwert 24a, 24b, 24c eines Datenpakets 22a, 22b, 22c beim Inkrementieren auf Null, so erkennt der Datenbusteilnehmer 7a, dass das entsprechende Datenpaket 22a, 22b, 22c bei dem der Zählerwert 24a, 24b, 24c auf Null springt an den Datenbusteilnehmer 7a gerichtet ist. In dem hier gezeigten Ausführungsbeispiel ist das erste Datenpaket 22a an den Datenbusteilnehmer 7a gerichtet. An diesem Datenbusteilnehmer 7a erfährt der Zählerwert 24a einen Nulldurchgang, wenn der Zählerwert 24a durch den Datenbusteilnehmer 7a erhöht wird. Der Datenbusteilnehmer 7a weiß in diesem Fall, dass die folgenden Symbole, die den Datenbusteilnehmer 7a durchlaufen für diesen Datenbusteilnehmer 7a bestimmt sind. Aus diesem Grund ist der Zählerwert 24a auch den anderen Feldern im Datenpaket 22a vorangestellt, so dass beim Erkennen eines Nulldurchgangs des Zählerwertes 24a der Datenbusteilnehmer 7a die folgenden Symbole verarbeiten kann. In dem hier gezeigten Ausführungsbeispiel ist der Datenbusteilnehmer 7a dazu ausgelegt, seine Adresse in das Feld 25a des an den Datenbusteilnehmer 7a gerichteten Datenpakets 22a zu schreiben. In dem hier gezeigten Ausführungsbeispiel ist die Adresse des Datenbusteilnehmers 7a #42. Das Ende des Datenpakets 22a stellt der Datenbusteilnehmer 7a fest durch den Empfang des Symbols mit dem eineindeutigen Bitmuster 23 des zweiten Datenpakets 22b. Der Datenbusteilnehmer 7a erhöht auch den Zählerwert 24b des zweiten Datenpakets 22b sobald das entsprechende Symbol des Datenpakets 22b dem Datenbusteilnehmer 7a vorliegt. Da der Wert des Zählerwertes 24b durch den Lokalbusmaster 3 aber derart angepasst wurde, dass der Wert des Zählerwertes 24b des zweiten Datenpakets 22b um eins erniedrigt war gegenüber dem Wert des Zählerwertes 24a des ersten Datenpakets 22a wird noch kein Nulldurchgang erkannt, sondern der Wert des Zählerwertes 24b des zweiten Datenpakets 22b nur von 1110 auf 1111 gesetzt. Der Datenbusteilnehmer 7a erhöht auch den Zählerwert 24c des dritten Datenpakets 22c sobald das entsprechende Symbol des Datenpakets 22c dem Datenbusteilnehmer 7a vorliegt. Da der Wert des Zählerwertes 24c durch den Lokalbusmaster 3 aber derart angepasst wurde, dass der Wert des Zählerwertes 24c des dritten Datenpakets 22c um eins erniedrigt war gegenüber dem Wert des Zählerwertes 24b des zweiten Datenpakets 22b wird auch hier noch kein Nulldurchgang erkannt, sondern der Wert des Zählerwertes 24c des dritten Datenpakets 22c nur von 1101 auf 1110 gesetzt. Der Datenbusteilnehmer 7a sendet die Datenpakete 22a, 22b, 22c symbolweise an den nächsten Datenbusteilnehmer 7b weiter. Dies ist mit den Datenpaketen 22a, 22b, 22c an Position (B) des Lokalbusses 6 angedeutet.

Der Datenbusteilnehmer 7b empfängt ebenfalls die Datenpakete 22a, 22b, 22c symbolweise und auch dieser Datenbusteilnehmer 7b ist angepasst den Zählerwert 24a, 24b, 24c zu erhöhen. Dies führt dazu, dass der Zählerwert 24a des ersten Datenpakets 22a von 0000 auf 0001 gesetzt wird und der Zählerwert 24b des zweiten Datenpakets 22b einen Nulldurchgang erfährt. Der Datenbusteilnehmer 7b erkennt in diesem Fall, dass das zweite Datenpaket 22b an den Datenbusteilnehmer 7b gerichtet ist und weiß, dass die folgenden Symbole dieses Datenpakets 22b an den Datenbusteilnehmer 7b gerichtet sind. Entsprechend des Datenbusteilnehmers 7a fügt der Datenbusteilnehmer 7b seine Adresse in das Feld 25b des zweiten Datenpakets 22b ein, wobei die Adresse des Datenbusteilnehmers 7b in dem hier gezeigten Ausführungsbeispiel #56 ist. Der Datenbusteilnehmer 7b inkrementiert auch den Zählerwert 24c des dritten Datenpakets 22c und zwar von 1110 auf 1111. Hierbei wird aber kein Nulldurchgang verzeichnet. Der Datenbusteilnehmer 7b sendet die Datenpakete 22a, 22b, 22c symbolweise an den nächsten Datenbusteilnehmer 7n weiter. Dies ist mit den Datenpaketen 22a, 22b, 22c an Position (C) des Lokalbusses 6 angedeutet.

Der Datenbusteilnehmer 7n empfängt ebenfalls die Datenpakete 22a, 22b, 22c symbolweise und auch dieser Datenbusteilnehmer 7n ist angepasst den Zählerwert 24a, 24b, 24c zu erhöhen. Dies führt dazu, dass der Zählerwert 24a des ersten Datenpakets 22a von 0001 auf 0010 gesetzt wird und der Zählerwert 24b des zweiten Datenpakets 22b von 0000 auf 0001. Der Zählerwert 24c des dritten Datenpakets 22c erfährt einen Nulldurchgang. Der Datenbusteilnehmer 7n erkennt in diesem Fall, dass das dritte Datenpaket 22c an den Datenbusteilnehmer 7n gerichtet ist und weiß, dass die folgenden Symbole an den Datenbusteilnehmer 7n gerichtet sind. Entsprechend der Datenbusteilnehmer 7a und 7b fügt der Datenbusteilnehmer 7n seine Adresse in das Feld 25c des dritten Datenpakets 22c ein, wobei die Adresse des Datenbusteilnehmers 7n in dem hier gezeigten Ausführungsbeispiel #88 ist. Der Datenbusteilnehmer 7n leitet die Symbole der Datenpakete 22a, 22b, 22c anschließend an die Abschlusseinheit 17x weiter, die diese wieder in Aufwärtsrichtung sendet. Dies ist mit den Datenpaketen 22a, 22b, 22c an Position (C) des Lokalbusses 6 angedeutet.

Der Lokalbumaster 3 empfängt die Datenpakete 22a, 22b, 22c mit den Feldern 25a, 25b, 25c und erlangt so Kenntnis darüber, dass der Datenbusteilnehmer 7a die Adresse #42 aufweist. Diese Adresse #42 kann der Lokalbusmaster 3 dann der relativen Position des Datenbusteilnehmers 7a zuordnen. Also hat der Lokalbusmaster 3 Kenntnis darüber, dass an der ersten relativen Position ein Datenbusteilnehmer 7a angeordnet ist, der die Adresse #42 aufweist. Gleiche Zuordnungen lassen sich dann auch für die Datenbusteilnehmer der relativen Positionen zwei und drei finden, nämlich das der Datenbusteilnehmer 7b an der zweiten relativen Position die Adresse #56 hat und der Datenbusteilnehmer 7n an der dritten relativen Position die Adresse #88 hat. Dabei ist die relative Position losgelöst von der physikalischen Position der Datenbusteilnehmer 7a, 7b, ..., 7n in dem Lokalbus 6. Beispielsweise können die ersten zwei relativen Positionen den physikalischen Positionen der Datenbusteilnehmer 7a, 7b entsprechen. Zwischen dem Datenbusteilnehmer 7b und 7n können aber physikalisch gesehen eine beliebige Anzahl von leeren Lokalbusplätzen vorhanden sein, die bezüglich der Statussignalleitung 19 und des Ringbusses 6 nur überbrückt sind, beispielsweise mit einer hier nicht gezeigten Moduleinheit. Der Datenbusteilnehmer 7n hat aber trotzdem die relative Position drei, weil dieser der dritte kommunikationsbereite Datenbusteilnehmer ist.

Dem Fachmann ist bewusst, dass die hier gezeigte relative Adressierung mit den zweiten Datenpaketen 22a, 22b, 22c nur beispielhaft zu verstehen ist und auch andere relative Adressierungen verwendet werden können, bei denen ein Zählerwert 24a, 25b, 24c von jedem kommunikationsbereiten Datenbusteilnehmer 7a, 7b, ..., 7n geändert werden kann aber ein Referenzwert nur genau einmal auftritt, so dass jedes Datenpaket 22a, 22b, 22c genau einem kommunikationsbereiten Datenbusteilnehmer 7a, 7b, ..., 7n zugeordnet ist. Was wiederum beim Lokalbusmaster 3 eine eineindeutige Zuordnung der Adressen der kommunikationsbereiten Datenbusteilnehmer 7a, 7b, ..., 7n mit deren relativen Position zulässt.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 5c: Statussignaleingang des Lokalbusmaster
- 6: Ringbus
- 7a, b, n: Datenbusteilnehmer
- 8: erste Abwärtsdatenschnittstelle
- 9: zweite Abwärtsdatenschnittstelle
- 10: erste Aufwärtsdatenschnittstelle
- 11: zweite Aufwärtsdatenschnittstelle
- 12: Verarbeitungseinheiten
- 12': Speicher
- 13, 14: Ein-/Ausgänge
- 15, 16: Sensor / Aktor
- 17x: Abschlusseinheit
- 18: Statussignalausgang der Abschlusseinheit
- 19: Statussignalleitung
- 20: Statussignaleingang der Datenbusteilnehmer
- 21: Statussignalausgang der Datenbusteilnehmer
- 22: Datenpaket
- 22a, b, c: Anzahl an Datenpaketen
- 23: Bitmuster
- 24: zweiter Zählerwert
- 25: Feld zum Speichern der Adresse eines Datenbusteilnehmers
- 26: Feld zum Zuweisen einer Adresse an einen Datenbusteilnehmer
- 27: Steuerinformation
- 28: erster Zählerwert
- 29: CRC-Feld

## Patentansprüche

1. Ein Verfahren zur Bestimmung von kommunikationsbereiten Datenbusteilnehmern (7a, 7b, ..., 7n) verbunden mit einem Lokalbus (6), wobei der Lokalbus (6) ein Ringbus ist, das Verfahren aufweisend:
Senden von zumindest einem Datenpaket (22a, 22b, 22c) von einem Lokalbusmaster (3) auf den Lokalbus (6) an alle Datenbusteilnehmer (7a, 7b, ...,
7n) des Lokalbusses (6) zur Abfrage einer Adresse eines kommunikationsbereiten Datenbusteilnehmers (7a, 7b, ..., 7n), wobei das zumindest eine Datenpaket (22a, 22b, 22c) einen Zählerwert (24) zur relativen Adressierung des abzufragenden kommunikationsbereiten Datenbusteilnehmers (7a, 7b, ..., 7n) und ein Adressdatenfeld (25) zum Einschreiben einer Adresse von dem abzufragenden kommunikationsbereiten Datenbusteilnehmer (7a, 7b, ..., 7n) aufweist;
Empfangen, an dem Lokalbusmaster (3), des zumindest einen Datenpakets (22a, 22b, 22c), ausgesendet von dem Lokalbusmaster (3) und übertragen über den Lokalbus (6), wobei das am Lokalbusmaster (3) empfangene zumindest eine Datenpaket (22a, 22b, 22c) die Adresse von dem abzufragenden kommunikationsbereiten Datenbusteilnehmer (7a, 7b, ..., 7n) aus einer Anzahl von kommunikationsbereiten Datenbusteilnehmern (7a, 7b, ..., 7n) in dem Lokalbus (6) aufweist, wobei der kommunikationsbereite Datenbusteilnehmer (7a, 7b, ..., 7n) innerhalb einer Reihenfolge der kommunikationsbereiten Datenbusteilnehmer (7a, 7b, ..., 7n) ist; und
Zuordnen der empfangenen Adresse zu einer relativen Position des kommunikationsbereiten Datenbusteilnehmers (7a, 7b, ..., 7n) innerhalb der Reihenfolge der kommunikationsbereiten Datenbusteilnehmer (7a, 7b, ..., 7n) in dem Lokalbus (6) durch den Lokalbusmaster (3).

2. Das Verfahren nach Anspruch 1, wobei das Senden des zumindest einen Datenpakets (22a, 22b, 22c) aufweist:
Senden einer Anzahl von Datenpaketen (22a, 22b, 22c), wobei die Anzahl der Datenpakete (22a, 22b, 22c) der Anzahl der kommunikationsbereiten Datenbusteilnehmer (7a, 7b, ..., 7n) entspricht.

3. Das Verfahren nach Anspruch 2, wobei jedes Datenpaket (22a, 22b, 22c) zur Abfrage der Adresse eines kommunikationsbereiten Datenbusteilnehmers (7a, 7b, ..., 7n) entsprechend einer relativen Position des kommunikationsbereiten Datenbusteilnehmers (7a, 7b, ..., 7n) innerhalb der Reihenfolge an kommunikationsbereiten Datenbusteilnehmern (7a, 7b, ..., 7n) in dem Lokalbus (6) in der Anzahl von Datenpaketen (22a, 22b, 22c) enthalten ist.

4. Das Verfahren nach einem der Ansprüche 1 bis 3, weiter aufweisend:
Zuweisen von jedem Datenpaket (22a, 22b, 22c) zu einem zugehörigen kommunikationsbereiten Datenbusteilnehmer (7a, 7b, ..., 7n) durch den Lokalbusmaster (3), indem der Zählerwert (24) von jedem Datenpaket (22a, 22b, 22c) durch den Lokalbusmaster (3) zugehörig zu einer Position innerhalb der Reihenfolge gesetzt wird.

5. Das Verfahren nach Anspruch 4, wobei das Setzen des Zählerwertes (24) in einem vorbestimmten inkrementellen Zählabstand zu einem Referenzwert erfolgt, so dass der Zählabstand einem Positionsabstand innerhalb der Reihenfolge der kommunikationsbereiten Datenbusteilnehmer (7a, 7b, ..., 7n) entspricht.

6. Das Verfahren nach einem der Ansprüche 1 bis 5, weiter aufweisend:
Schreiben einer in dem kommunikationsbereiten Datenbusteilnehmer (7a, 7b, ..., 7n) gespeicherten Adresse in das Adressdatenfeld (25) des Datenpakets (22a, 22b, 22c), wenn der aktuelle Zählerwert (24) im Datenpaket (22a, 22b, 22c) an dem kommunikationsbereiten Datenbusteilnehmer (7a, 7b, ..., 7n) einem Referenzwert entspricht.

7. Das Verfahren nach einem der Ansprüche 1 bis 6, wobei der Datenbusteilnehmer (7a, 7b, ..., 7n) dann kommunikationsbereit ist, wenn der Datenbusteilnehmer (7a, 7b, ..., 7n) taktsynchronisiert ist auf den Lokalbus (6) und eine Verarbeitungseinheit (12a, 12b, ..., 12n) des Datenbusteilnehmers (7a, 7b, ..., 7n) über den Lokalbus (6) empfangene Daten verarbeiten kann.

8. Das Verfahren nach einem der Ansprüche 1 bis 7, weiter aufweisend:
vor dem Senden des zumindest einen Datenpakets (22a, 22b, 22c) zur Abfrage der Adresse, Senden eines anderen Datenpakets (22) von dem Lokalbusmaster (3) an alle Datenbusteilnehmer (7a, 7b, ... , 7n) zum Abzählen der kommunikationsbereiten Datenbusteilnehmer (7a, 7b, ..., 7n) in der Reihenfolge, wobei das andere Datenpaket (22) zum Abzählen einen anderen Zählerwert (28) aufweist, der von jedem der kommunikationsbereiten Datenbusteilnehmer (7a, 7b, ..., 7n) in der Reihenfolge geändert wird.

9. Das Verfahren nach Anspruch 8, weiter aufweisend:
Bestimmen der Anzahl der kommunikationsbereiten Datenbusteilnehmer (7a, 7b, ..., 7n) durch den Lokalbusmaster (3), insbesondere basierend auf dem anderen Zählerwert (28).

10. Das Verfahren nach einem der Ansprüche 1 bis 9, wobei das Senden des zumindest einen Datenpakets (22a, 22b, 22c) zur Abfrage der Adresse und/oder das Senden des anderen Datenpakets (22) zum Abzählen solange wiederholt wird, bis ein Statussignal an einem Statussignaleingang (5c) des Lokalbusmasters (3) signalisiert, dass alle mit dem Lokalbus (6) verbundenen Datenbusteilnehmer (7a, 7b, ..., 7n) kommunikationsbereit sind.

11. Das Verfahren nach Anspruch 10, wobei der Lokalbusmaster (3) für jeden kommunikationsbereiten Datenbusteilnehmer (7a, 7b, ..., 7n) jeweils ein Datenpaket (22a, 22b, 22c) zur Abfrage der Adresse sendet, wenn entsprechend dem Statussignal alle mit dem Lokalbus (6) verbundenen Datenbusteilnehmer (7a, 7b, ..., 7n) kommunikationsbereit sind, wobei der Lokalbusmaster (3) die Adressen jedes verbundenen Datenbusteilnehmers (7a, 7b, ..., 7n) der Position innerhalb der Reihenfolge zuordnet für die physikalische Position jedes Datenbusteilnehmers (7a, 7b, ..., 7n) innerhalb des Lokalbusses (6).

12. Ein Lokalbusmaster (3) eines Lokalbusses (6), wobei der Lokalbus (6) ein Ringbus ist, der Lokalbusmaster (3) aufweisend:
ein Mittel zum Senden zumindest eines Datenpakets (22a, 22b, 22c) an alle Datenbusteilnehmer (7a, 7b, ..., 7n) zur Abfrage einer Adresse eines kommunikationsbereiten Datenbusteilnehmers (7a, 7b, ..., 7n), wobei das zumindest eine Datenpaket (22a, 22b, 22c) einen Zählerwert (24) zur relativen Adressierung des abzufragenden Datenbusteilnehmers (7a, 7b, ..., 7n) und ein Adressdatenfeld (25) zum Einschreiben einer Adresse von dem abzufragenden Datenbusteilnehmer (7a, 7b, ..., 7n) aufweist;
ein Mittel zum Empfangen des zumindest einen Datenpakets (22a, 22b, 22c), ausgesendet von dem Lokalbusmaster (3) und übertragen über den Lokalbus (6), wobei das zumindest eine Datenpaket (22a, 22b, 22c) die Adresse von dem abzufragenden kommunikationsbereiten Datenbusteilnehmer (7a, 7b, ..., 7n) aus einer Anzahl von kommunikationsbereiten Datenbusteilnehmern (7a, 7b, ..., 7n) in dem Lokalbus (6) aufweist, wobei der kommunikationsbereite Datenbusteilnehmer (7a, 7b, ..., 7n) innerhalb einer Reihenfolge der kommunikationsbereiten Datenbusteilnehmern (7a, 7b, ..., 7n) ist; und
ein Mittel zum Zuordnen der empfangenen Adresse zu einer relativen Position des kommunikationsbereiten Datenbusteilnehmers (7a, 7b, ..., 7n) innerhalb der Reihenfolge der kommunikationsbereiten Datenbusteilnehmer (7a, 7b, ..., 7n) in dem Lokalbus (6).

13. Der Lokalbusmaster (3) nach Anspruch 12,
wobei das Mittel zum Senden eingerichtet ist zum Senden eines anderen Datenpakets (22) an alle Datenbusteilnehmer (7a, 7b, ..., 7n) zum Abzählen der kommunikationsbereiten Datenbusteilnehmer (7a, 7b, ..., 7n) in der Reihenfolge, wobei das andere Datenpaket (22) zum Abzählen vor dem zumindest einen Datenpaket (22a, 22b, 22c) zur Abfrage der Adresse gesendet wird und wobei das andere Datenpaket (22) einen anderen Zählerwert (28) aufweist, der von jedem kommunikationsbereiten Datenbusteilnehmer (7a, 7b, ..., 7n) in der Reihenfolge geändert wird.

14. Der Lokalbusmaster (3) nach einem der Ansprüche 12 oder 13, weiter aufweisend:
einen Statussignaleingang (5c) zum Empfangen eines Statussignals, wobei das Statussignal signalisiert, dass alle mit dem Lokalbus (6) verbundenen Datenbusteilnehmer (7a, 7b, ..., 7n) kommunikationsbereit sind; und
wobei das Mittel zum Senden des zumindest einen Datenpakets (22a, 22b, 22c) zur Abfrage der Adresse und /oder das Mittel zum Senden des anderen Datenpakets (22) zum Abzählen angepasst sind das Senden des zumindest einen Datenpakets (22a, 22b, 22c) zur Abfrage der Adresse und / oder des Datenpakets (22) zum Abzählen so lange zu wiederholen, bis das Statussignal an dem Statussignaleingang (5c) signalisiert, dass alle mit dem Lokalbus (6) verbundenen Datenbusteilnehmer (7a, 7b, ..., 7n) kommunikationsbereit sind.

## Claims

1. A method for identifying communication-ready data bus subscribers (7a, 7b, ..., 7n) that are connected to a local bus (6), wherein the local bus (6) is a ring bus, the method comprising:
sending at least one data packet (22a, 22b, 22c) from a local bus master (3) onto the local bus (6) to all of the data bus subscribers (7a, 7b, ..., 7n) of the local bus (6) for querying an address of a communication-ready data bus subscriber (7a, 7b, ..., 7n), wherein the at least one data packet (22a, 22b, 22c) comprises a counter value (24) for relative addressing the to be queried communication-ready data bus subscriber (7a, 7b, ..., 7n) and an address field (25) for writing in an address of the to be queried communication-ready data bus subscriber (7a, 7b, ..., 7n);
receiving, at the local bus master (3), at least one data packet (22a, 22b, 22c) sent by the local bus master (3) and transmitted via the local bus (6), the at least one data packet (22a, 22b, 22c) being received at the local bus master (3) comprises an address of a communication-ready data bus subscriber (7a, 7b, ..., 7n) among a plurality of communication-ready data bus subscribers (7a, 7b, ..., 7n) in the local bus (6), wherein the communication-ready data bus subscriber (7a, 7b, ..., 7n) is in a sequence of communication-ready data bus subscribers (7a, 7b, ..., 7n); and
mapping the received address to a relative position of the communication-ready data bus subscriber (7a, 7b, ..., 7n) in the sequence of communication-ready data bus subscribers (7a, 7b, ..., 7n) in the local bus (6) by the local bus master (3).

2. The method according to claim 1, wherein the sending of the at least one data packet (22a, 22b, 22c) comprises:
sending a number of data packets (22a, 22b, 22c), wherein the number of data packets (22a, 22b, 22c) corresponds to the number of communication-ready data bus subscribers (7a, 7b, ..., 7n).

3. The method according to claim 2, wherein each data packet (22a, 22b, 22c) for querying the address of a communication-ready data bus subscriber (7a, 7b, ..., 7n) corresponding to a relative position of the communication-ready data bus subscriber (7a, 7b, ..., 7n) in the sequence of communication-ready data bus subscribers (7a, 7b, ..., 7n) in the local bus (6), is included in the plurality of data packets (22a, 22b, 22c).

4. The method according to any of claims 1 to 3, further comprising:
assigning each data packet (22a, 22b, 22c) to an associated communication-ready data bus subscriber (7a, 7b, ..., 7n) by setting the counter value (24) of each data packet (22a, 22b, 22c) by the local bus master (3) so as to be associated with a position in the sequence.

5. The method according to claim 4, wherein the setting of the counter value (24) takes place at a predetermined incremental count offset from a reference value, so that the count offset corresponds to a position offset in the sequence of communication-ready data bus subscribers (7a, 7b, ..., 7n).

6. The method according to any of claims 1 to 5, further comprising:
writing an address stored in the communication-ready data bus subscriber (7a, 7b, ..., 7n) into the address data field (25) of the data packet (22a, 22b, 22c) if the current counter value (24) in the data packet (22a, 22b, 22c) corresponds to a reference value in the communication-ready data bus subscriber (7a, 7b, ..., 7n).

7. The method according to any of claims 1 to 6, wherein the data bus subscriber (7a, 7b, ..., 7n) is communication-ready if the data bus subscriber (7a, 7b, ..., 7n) is clock-synchronized to the local bus (6) and a processing unit (12a, 12b, ..., 12n) of the data bus subscriber (7a, 7b, ..., 7n) is able to process data received via the local bus (6).

8. The method according to any of claims 1 to 7, further comprising: before sending the at least one data packet (22a, 22b, 22c) for querying the address, sending another data packet (22) from the local bus master (3) to all data bus subscribers (7a, 7b, ..., 7n) in order to count the communication-ready data bus subscribers (7a, 7b, ..., 7n) in sequence, wherein the other data packet (22) for counting has a different counter value (28) which is changed by each of the communication-ready data bus subscribers (7a, 7b, ..., 7n) in sequence.

9. The method according to claim 8, further comprising:
identifying, by the local bus master (3), the number of communication-ready data bus subscribers (7a, 7b, ..., 7n) based on the other counter value (28).

10. The method according to any of claims 1 to 9, wherein the sending of the at least one data packet (22a, 22b, 22c) for querying the address and/or the sending of the other data packet (22) for counting is repeated until a status signal at a status signal input (5c) of the local bus master (3) signals that all data bus subscribers (7a, 7b, ..., 7n) connected to the local bus (6) are communication-ready.

11. The method according to claim 10, wherein for each communication-ready data bus subscriber (7a, 7b, ..., 7n) the local bus master (3) sends a respective data packet (22a, 22b, 22c) for querying the address, if according to the status signal all data bus subscribers (7a, 7b, ..., 7n) connected to the local bus (6) are communication-ready, wherein the local bus master (3) maps the addresses of each connected data bus subscriber (7a, 7b, ..., 7n) to the position in the sequence for the physical position of each data bus subscriber (7a, 7b, ..., 7n) in the local bus (6).

12. A local bus master (3) of a local bus (6), wherein the local bus (6) is a ring bus, the local bus master (3) comprising:
means for sending at least one data packet (22a, 22b, 22c) to all data bus subscribers (7a, 7b, ..., 7n) for querying an address of a communication-ready data bus subscriber (7a, 7b, ..., 7n), wherein the at least one data packet (22a, 22b, 22c) comprises a counter value (24) for relative addressing the to be queried data bus subscriber (7a, 7b, ..., 7n) and an address field (25) for writing in an address of the to be queried data bus subscriber (7a, 7b, ..., 7n);
means for receiving the at least one data packet (22a, 22b, 22c) sent by the local bus master (3) and transmitted via the local bus (6), wherein the at least one data packet (22a, 22b, 22c) comprises the address of the queried communication-ready data bus subscriber (7a, 7b, ..., 7n) among a plurality of communication-ready data bus subscribers (7a, 7b, ..., 7n) in the local bus (6), wherein the communication-ready data bus subscriber (7a, 7b, ..., 7n) is in a sequence of communication-ready data bus subscribers (7a, 7b, ..., 7n); and
means for mapping the received address to a relative position of the communication-ready data bus subscriber (7a, 7b, ..., 7n) in the sequence of communication-ready data bus subscribers (7a, 7b, ..., 7n) in the local bus (6).

13. The local bus master (3) according to claim 12, wherein
the means for senmding is configured to send another data packet (22) to all data bus subscribers (7a, 7b, ..., 7n) in order to count the communication-ready data bus subscribers (7a, 7b, ..., 7n) in sequence, wherein this other data packet (22) is sent for counting before the at least one data packet (22a, 22b, 22c) is sent for querying the address, and wherein the other data packet (22) has another counter value (28) that is changed in sequence by each communication-ready data bus subscriber (7a, 7b, ..., 7n).

14. The local bus master (3) according to any of claims 12 and 13, further comprising:
a status signal input (5c) for receiving a status signal, wherein the status signal signals that all data bus subscribers (7a, 7b, ..., 7n) connected to the local bus (6) are communication-ready; and wherein the means for sending the at least one data packet (22a, 22b, 22c) for querying the address and/or the means for sending the other data packet (22) for counting are adapted to repeat the sending of the at least one data packet (22a, 22b, 22c) for querying the address and/or the data packet (22) for counting until the status signal at the status signal input (5c) signals that all data bus subscribers (7a, 7b, ..., 7n) connected to the local bus (6) are communication-ready.

## Revendications

1. Un procédé pour la détermination de participants à un bus de données (7a, 7b, ..., 7n) disponibles pour la communication connectés à un bus local (6), dans lequel le bus local (6) est un bus en anneau, le procédé comprenant :
l'envoi sur le bus local (6) depuis un maître de bus local (3) d'au moins un paquet de données (22a, 22b, 22c) à tous les participants de bus de données (7a, 7b, ..., 7n) du bus local (6) pour la requête d'une adresse d'un participant de bus de données (7a, 7b, ..., 7n) disponible pour la communication, dans lequel le au moins un paquet de données (22a, 22b, 22c) comprend une valeur de compteur (24) pour l'adressage relatif du participant de bus de données (7a, 7b, ..., 7n) disponible pour la communication à interroger, et un champ de données d'adresse (25) pour l'inscription d'une adresse du participant de bus de données (7a, 7b, ..., 7n) disponible pour la communication à interroger ;
la réception, sur le maître de bus local (3), du au moins un paquet de données (22a, 22b, 22c) envoyé par le maître de bus local (3) et transmis par l'intermédiaire du bus local (6), dans lequel le au moins un paquet de données (22a, 22b, 22c) reçu sur le maître de bus local (3) comprend l'adresse du participant de bus de données (7a, 7b, ..., 7n) disponible pour la communication à interroger provenant d'un nombre de participants de bus de données (7a, 7b, ..., 7n) disponibles pour la communication sur le bus local (6), dans lequel le participant de bus de données (7a, 7b, ..., 7n) disponible pour la communication se trouve dans une séquence des participants de bus de données (7a, 7b, ..., 7n) disponibles pour la communication ; et
l'attribution par le maître de bus local (3) de l'adresse reçue à une position relative du participant de bus de données (7a, 7b, ..., 7n) disponible pour la communication dans la séquence des participants de bus de données (7a, 7b, ..., 7n) disponibles pour la communication sur le bus local (6).

2. Le procédé selon la revendication 1, dans lequel l'envoi du au moins un paquet de données (22a, 22b, 22c) comprend :
l'envoi d'un nombre de paquets de données (22a, 22b, 22c), dans lequel le nombre des paquets de données (22a, 22b, 22c) correspond au nombre de participants de bus de données (7a, 7b, ..., 7n) disponibles pour la communication.

3. Le procédé selon la revendication 2, dans lequel chaque paquet de données (22a, 22b, 22c) pour la requête de l'adresse d'un participant de bus de données (7a, 7b, ..., 7n) disponible pour la communication en fonction d'une position relative du participant de bus de données (7a, 7b, ..., 7n) disponible pour la communication dans la séquence de participants de bus de données (7a, 7b, ..., 7n) disponibles pour la communication sur le bus local (6) est contenu dans le nombre de paquet de données (22a, 22b, 22c).

4. Le procédé selon l'une des revendications 1 à 3, comprenant en outre :
l'attribution par le maître de bus local (3) de chaque paquet de données (22a, 22b, 22c) à un participant de bus de données (7a, 7b, ..., 7n) disponible pour la communication associé, du fait que la valeur de compteur (24) de chaque paquet de données (22a, 22b, 22c) est ajustée par le maître de bus local (3) de manière associée à une position dans la séquence.

5. Le procédé selon la revendication 4, dans lequel l'ajustement de la valeur de compteur (24) s'effectue dans un écart de comptage incrémentiel prédéfini par rapport à une valeur de référence, de sorte que l'écart de comptage corresponde à un écart de position dans la séquence des participants de bus de données (7a, 7b, ..., 7n) disponibles pour la communication.

6. Le procédé selon l'une des revendications 1 à 5, comprenant en outre :
l'inscription d'une adresse mise en mémoire dans le participant de bus de données (7a, 7b, ..., 7n) disponible pour la communication dans le champ de données d'adresse (25) du paquet de données (22a, 22b, 22c), lorsque la valeur de compteur (24) actuelle dans le paquet de données (22a, 22b, 22c) correspond à une valeur de référence sur le participant de bus de données (7a, 7b, ..., 7n) disponible pour la communication.

7. Le procédé selon l'une des revendications 1 à 6, dans lequel le participant de bus de données (7a, 7b, ..., 7n) est disponible pour la communication lorsque le participant de bus de données (7a, 7b, ..., 7n) est synchronisé par rapport à l'horloge sur le bus local (6), et une unité de traitement (12a, 12b, ..., 12n) du participant de bus de données (7a, 7b, ..., 7n) peut traiter les données reçues par l'intermédiaire de bus local (6).

8. Le procédé selon l'une des revendications 1 à 7, comprenant en outre :
avant l'envoi du au moins un paquet de données (22a, 22b, 22c) pour la requête de l'adresse, l'envoi par le maître de bus local (3) d'un autre paquet de données (22) à tous les participants de bus de données (7a, 7b, ..., 7n) pour compter les participants de bus de données (7a, 7b, ..., 7n) disponibles pour la communication dans la séquence, dans lequel l'autre paquet de données (22) comprend pour le comptage une autre valeur de compteur (28), qui est modifiée par chacun des participants de bus de données (7a, 7b, ..., 7n) disponibles pour la communication dans la séquence.

9. Le procédé selon la revendication 8, comprenant en outre :
la détermination par le maître de bus local (3) du nombre des participants de bus de données (7a, 7b, ..., 7n) disponibles pour la communication, en particulier sur la base de l'autre valeur de compteur (28).

10. Le procédé selon l'une des revendications 1 à 9, dans lequel l'envoi du au moins un paquet de données (22a, 22b, 22c) pour la requête de l'adresse et/ou l'envoi de l'autre paquet de données (22) pour le comptage est répété jusqu'à ce qu'un signal de statut à une entrée de signal de statut (5c) de maître de bus local (3) signale que tous les participants de bus de données (7a, 7b, ..., 7n) connectés au bus local (6) sont disponibles pour la communication.

11. Le procédé selon la revendication 10, dans lequel le maître de bus local (3) envoie respectivement pour chaque participant de bus de données (7a, 7b, ..., 7n) disponible pour la communication un paquet de données (22a, 22b, 22c) pour la requête de l'adresse, lorsqu'en fonction du signal de statut tous les participants de bus de données (7a, 7b, ..., 7n) connectés au bus local (6) sont disponibles pour la communication, dans lequel le maître de bus local (3) attribue les adresses de chaque participant de bus de données (7a, 7b, ..., 7n) connecté à la position dans la séquence pour la position physique de chaque participant de bus de données (7a, 7b, ..., 7n) sur le bus local (6).

12. Un maître de bus local (3) d'un bus local (6), dans lequel le bus local (6) est un bus en anneau, le maître de bus local (3) comprenant :
un moyen pour l'envoi d'au moins un paquet de données (22a, 22b, 22c) à tous les participants du d'un bus de données (7a, 7b, ..., 7n) pour la requête d'une adresse d'un participant de bus de données (7a, 7b, ..., 7n) disponible pour la communication, dans lequel le au moins un paquet de données (22a, 22b, 22c) comprend une valeur de compteur (24) pour l'adressage relatif du participant de bus de données (7a, 7b, ..., 7n) à interroger, et un champ de données d'adresse (25) pour l'inscription d'une adresse par le participant de bus de données (7a, 7b, ..., 7n) à interroger ;
un moyen pour recevoir le au moins un paquet de données (22a, 22b, 22c), envoyé par le maître de bus local (3) et transmis par l'intermédiaire de bus local (6), dans lequel le au moins un paquet de données (22a, 22b, 22c) comprend l'adresse du participant de bus de données (7a, 7b, ..., 7n) disponible pour la communication à interroger provenant d'un nombre de participants de bus de données (7a, 7b, ..., 7n) disponibles pour la communication sur le bus local (6), dans lequel le participant de bus de données (7a, 7b, ..., 7n) disponible pour la communication est dans une séquence des participants de bus de données (7a, 7b, ..., 7n) disponibles pour la communication ; et
un moyen pour attribuer l'adresse reçue à une position relative du participant de bus de données (7a, 7b, ..., 7n) disponible pour la communication dans la séquence des participants de bus de données (7a, 7b, ..., 7n) disponibles pour la communication sur le bus local (6).

13. Le maître de bus local (3) selon la revendication 12,
dans lequel le moyen pour l'envoi est conçu pour l'envoi d'un autre paquet de données (22) à tous les participants de bus de données (7a, 7b, ..., 7n) pour compter les participants de bus de données (7a, 7b, ..., 7n) disponibles pour la communication dans la séquence, dans lequel l'autre paquet de données (22) pour le comptage est envoyé avant le au moins un paquet de données (22a, 22b, 22c) pour la requête de l'adresse et dans lequel l'autre paquet de données (22) comprend une autre valeur de compteur (28), qui est modifiée par chaque participant de bus de données (7a, 7b, ..., 7n) disponible pour la communication dans la séquence.

14. Le maître de bus local (3) selon l'une des revendications 12 ou 13, comprenant en outre :
une entrée de signal de statut (5c) pour recevoir un signal de statut, dans lequel le signal de statut signale que tous les participants de bus de données (7a, 7b, ..., 7n) connectés au bus local (6) sont disponibles pour la communication ; et
dans lequel le moyen pour l'envoi du au moins un paquet de données (22a, 22b, 22c) pour la requête de l'adresse et/ou le moyen pour l'envoi de l'autre paquet de données (22) pour le comptage sont adaptés pour répéter l'envoi du au moins un paquet de données (22a, 22b, 22c) pour la requête de l'adresse et/ou du paquet de données (22) pour le comptage jusqu'à ce que le signal de statut signale à l'entrée de signal de statut (5c) que tous les participants de bus de données (7a, 7b, ..., 7n) connectés au bus local (6) sont disponibles pour la communication.
